# FASCICULE DE BREVET EUROPEEN

(11) **EP 2 055 614 B1**
(45) Date de publication et mention de la délivrance du brevet: **12.07.2017**
(21) Numéro de dépôt: 08166435.1
(22) Date de dépôt: 13.10.2008
(51) Int. Cl.: B62D 25/04, B62D 25/20

(54) **Structure de véhicule automobile**
Struktur eines Kraftfahrzeugs
Automobile structure

(30) Priorité: 23.10.2007 FR 0758507
(43) Date de publication de la demande: 06.05.2009
(73) Titulaire: Peugeot Citroën Automobiles SA, 78140 Vélizy-Villacoublay (FR)
(72) Inventeur: Desplanches, Patrice, 78100, SAINT GERMAIN EN LAYE (FR); Breton, Clémont, 13100, AIX EN PROVENCE (FR); Bizon, Patrick, 92150, SURESNES (FR)

(56) Documents cités:
- JP-A- 61 169 376
- JP-A- 2000 038 166
- JP-A- 2002 347 662
- JP-A- 2004 142 554
- JP-U- 2 026 977

## Description

La présente invention concerne une structure de véhicule automobile comprenant :
- un pied avant,
- un longeron, fixé au pied avant suivant une jonction,
- un renfort de liaison, fixé au pied avant et au longeron.

L'invention concerne également un véhicule automobile comportant une telle structure.

Les structures des véhicules automobiles comportent habituellement un pied avant, situé sur un côté du véhicule entre un passage de roue avant et une ouverture de porte avant, un longeron, situé sur le même côté du véhicule entre le passage de roue avant et un passage de roue arrière, et un renfort de liaison, fixé au pied avant et au longeron.

Il est connu d'avoir une jonction entre le pied avant et le longeron parallèle à la direction d'extension du longeron, c'est-à-dire suivant l'axe longitudinal du véhicule. Le renfort de liaison a alors généralement une âme en forme de « L », chaque côté du « L » ayant sensiblement la même longueur, et une aile recourbée s'étendant à partir d'un bord de l'âme. Le renfort a donc principalement une section en forme de « L ».

Le renfort est en surépaisseur par rapport au longeron et au pied avant dans une zone de jonction entre le pied avant et le longeron. L'âme en forme de « L » s'étend à la fois suivant l'axe vertical et suivant l'axe longitudinal du véhicule.

Il est par exemple connu du document JP-A-2000 03816, qui divulgue une structure de véhicule automobile selon le préambule de la revendication 1, d'avoir une âme qui s'étend sensiblement selon un plan perpendiculaire à l'axe vertical du véhicule pour former un tel renfort.

Il a ainsi pour fonction principale de rigidifier la zone, mais pas de transmettre les efforts selon l'axe longitudinal.

Or, pour augmenter la visibilité du conducteur, l'épaisseur du montant de pare-brise est actuellement fortement réduite, si bien que moins d'efforts peuvent transiter en partie haute du véhicule lors d'un choc frontal. Une autre voie utilisée consiste donc à optimiser la transmission des efforts en partie basse, c'est-à-dire dans les longerons de structure, afin de ne pas nuire à la visibilité du conducteur.

Le but de l'invention est donc d'assurer au mieux la transmission des efforts en partie basse du véhicule, suivant l'axe longitudinal, lors d'un choc frontal.

A cet effet, l'invention a pour objet une structure de véhicule telle que décrite précédemment, caractérisée en ce que la jonction entre le pied avant et le longeron est perpendiculaire à la direction d'extension du longeron et s'étend transversalement par rapport à la direction d'extension du longeron et en ce que le renfort de liaison est allongé selon la direction d'extension du longeron.

Selon d'autres modes de réalisation, la structure comprend une ou plusieurs des caractéristiques suivantes, prise(s) isolément ou toutes les combinaisons techniquement possibles :
- le pied avant comporte une première demi-coque et une deuxième demi-coque délimitant entre elles une structure en caisson allongée de section transversale fermée, et en ce que le longeron comporte une première demi-coque et une deuxième demi-coque délimitant entre elles une structure en caisson allongée de section transversale fermée,
- le renfort de liaison comprend un premier élément de liaison et un deuxième élément de liaison, qui ne sont pas fixés l'un à l'autre,
- la structure comporte également un appui de cric avant, fixé au renfort de liaison et au pied avant,
- les premières demi-coques et le premier élément de liaison se chevauchent dans une première zone au droit de la jonction entre le pied avant et le longeron, et/ou les deuxièmes demi-coques et le deuxième élément de liaison se chevauchent dans une deuxième zone au droit de la jonction entre le pied avant et le longeron,
- chaque demi-coque du longeron comporte une âme, une aile supérieure et une aile inférieure et le renfort de liaison est à l'écart de l'aile inférieure correspondante,
- le renfort de liaison a une forme allongée et possède une âme et des pattes de fixation s'étendant à partir des bords de l'âme et repliées dans des sens opposés,
- le renfort de liaison est réalisé par découpe et déformation d'un flanc de tôle.

L'invention et ses avantages seront mieux compris à la lecture de la description qui va suivre, donnée uniquement à titre d'exemple et faite en référence aux dessins annexés, sur lesquels :
- la figure 1 est une vue en perspective, depuis l'extérieur du véhicule vers l'intérieur, d'une roue avant droite et d'une jonction entre un pied avant et un longeron avec au moins une partie d'un renfort de liaison, selon l'invention,
- la figure 2 est une vue en perspective, depuis l'intérieur du véhicule vers l'extérieur d'une jonction entre un pied avant et un longeron avec un renfort de liaison, près de la roue avant droite, selon l'invention,
- la figure 3 est une vue en perspective d'un premier élément de liaison selon l'invention,
- la figure 4 est une vue en perspective d'un deuxième élément de liaison selon l'invention,
- la figure 5 est une vue en perspective, selon l'invention, d'une jonction entre un pied avant et un longeron comprenant le deuxième élément de liaison et un appui de cric avant,
- la figure 6 est une vue en coupe, selon l'invention, d'un pied avant, des premier et deuxième éléments de liaison et d'un appui de cric avant, selon la ligne VI-VI de la figure 5, et
- la figure 7 est une vue en coupe longitudinale d'une liaison entre le pied avant, le longeron et le deuxième élément de liaison selon l'invention.

Dans la suite de la description, les termes « avant », « arrière », « droite », « gauche », « haut », « bas », « longitudinal », « transversal » et « vertical » s'entendent par référence au système d'axe orthogonal usuel des véhicules automobiles, représenté sur les différentes figures, et possédant :
- un axe longitudinal X, dirigé de l'arrière vers l'avant,
- un axe transversal Y, dirigé de la droite vers la gauche, et
- un axe vertical Z, dirigé du bas vers le haut.

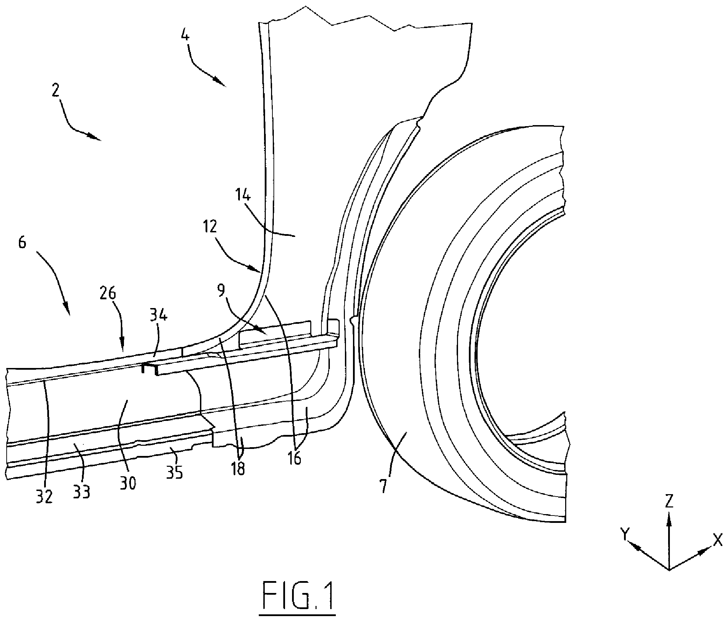

La figure 1 illustre une partie du côté droit d'une ossature 2 pour un véhicule automobile comprenant un pied avant 4, un pied milieu non représenté, un pied arrière non représenté, et un longeron 6, qui s'étend selon l'axe longitudinal entre un passage de roue avant 7 et un passage de roue arrière non représenté. Le longeron 6 est relié au pied avant 4 dans sa partie basse, ainsi qu'au pied milieu non représenté dans sa partie basse et qu'au pied arrière non représenté dans sa partie basse.

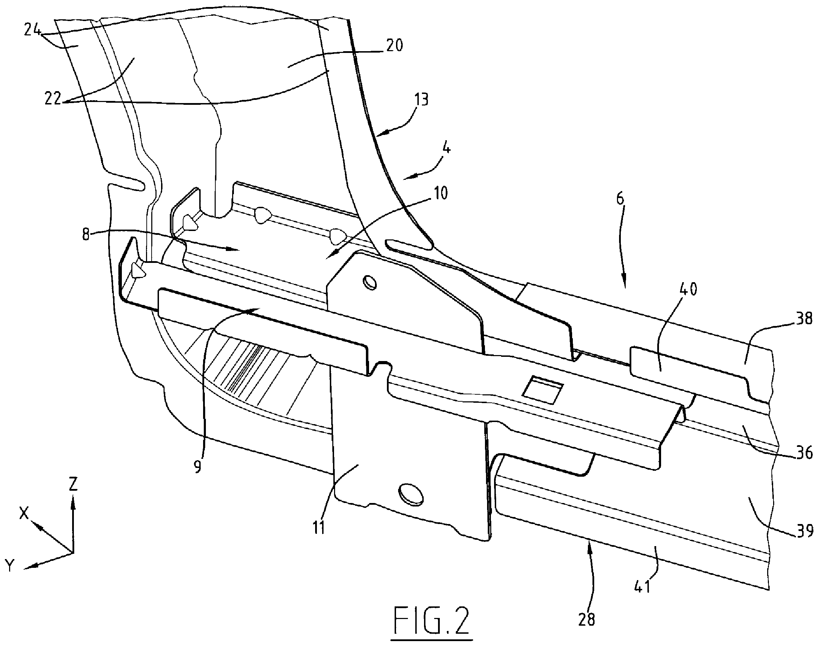

Sur la figure 2, un renfort de liaison 8, selon l'invention, est fixé au pied avant 4, par l'intermédiaire d'une partie arrière, et au longeron 6, par l'intermédiaire de son extrémité avant. Le renfort de liaison 8 comprend un premier élément 9 de liaison et un deuxième élément 10 de liaison, qui, dans le mode de réalisation décrit, ne sont pas fixés l'un à l'autre.

Un appui de cric 11 disposé à l'extrémité du pied avant 4, au voisinage du longeron 6, permet de soulever le véhicule, à l'aide d'un cric, par exemple en cas de changement de roue.

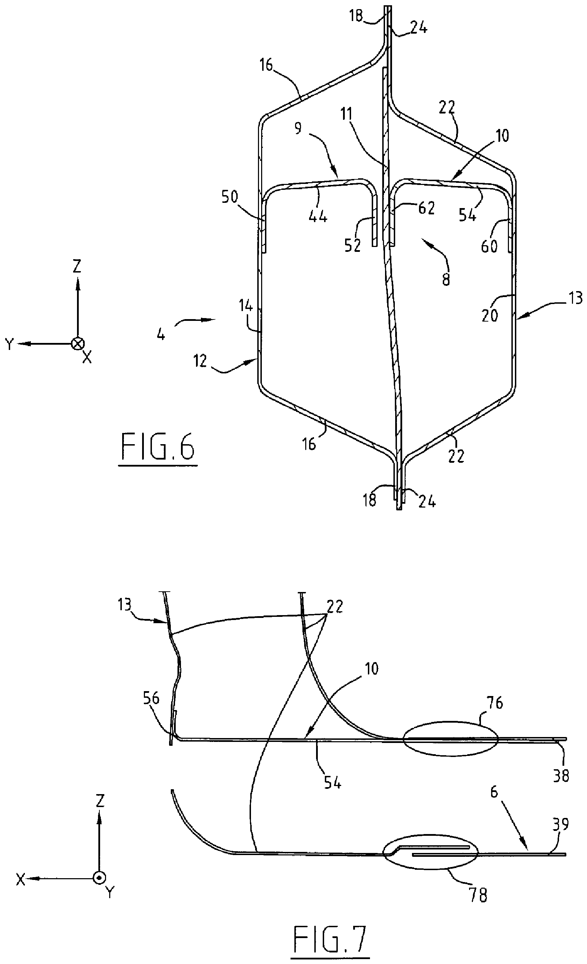

Comme le montre la figure 6, le pied avant 4 comprend une première demi-coque 12 et une deuxième demi-coque 13 délimitant entre elles une structure en caisson allongée de section transversale fermée. Les demi-coques 12, 13 sont des tôles métalliques embouties s'étendant principalement suivant la direction verticale.

La première demi-coque 12 du pied avant 4, également appelée doublure arrière d'aile avant, possède une section transversale en « U » ouverte vers l'extérieur du véhicule, et comprend une âme 14 sensiblement verticale, et deux ailes 16 s'étendant vers l'extérieur du véhicule à partir de l'âme 14. Chaque aile 16 est munie d'un bord 18 replié vers l'extérieur de la demi-coque 12.

La deuxième demi-coque 13 du pied avant 4, également appelée renfort de pied avant, possède une section transversale en « U » ouverte vers l'intérieur du véhicule, et comprend une âme 20 sensiblement verticale, et deux ailes 22 s'étendant vers l'intérieur du véhicule à partir de l'âme 20. Chaque aile 22 est munie d'un bord 24 replié vers l'extérieur de la demi-coque 13.

La première demi-coque 12 et la deuxième demi-coque 13 sont par exemple soudées entre elles le long de leurs bords 18, 24, pour former le pied avant 4.

Sur les figures 1 et 2, le longeron 6 comporte une première demi-coque 26 et une deuxième demi-coque 28 délimitant entre elles une structure en caisson allongée de section transversale fermée. Les demi-coques 26, 28 sont des tôles métalliques embouties s'étendant suivant la direction longitudinale.

La première demi-coque 26 du longeron 6, également appelée longeron intérieur, possède une section transversale en « U » ouverte vers l'extérieur du véhicule. La première demi-coque 26 comprend une âme 30 sensiblement verticale, s'étendant longitudinalement, une aile supérieure 32 et une aile inférieure 33 sensiblement horizontales, s'étendant vers l'extérieur du véhicule à partir de l'âme 30. L'aile 32 est munie d'un bord 34, l'aile 33 est munie d'un bord 35, les bords 34, 35 étant repliés vers l'extérieur de la demi-coque 26.

La deuxième demi-coque 28 du longeron 6, également appelée longeron extérieur, possède une section transversale en « U » ouverte vers l'intérieur du véhicule. La deuxième demi-coque 28 comprend une âme 36 sensiblement verticale, s'étendant longitudinalement, une aile supérieure 38 et une aile inférieure 39 sensiblement horizontales, s'étendant vers l'intérieur du véhicule à partir de l'âme 36. L'aile 38 est munie d'un bord 40, l'aile 39 est munie d'un bord 41, les bords 40, 41 étant repliés vers l'extérieur de la demi-coque 28.

La première demi-coque 26 et la deuxième demi-coque 28 sont par exemple soudées entre elles le long de leurs bords 34, 35, 40, 41, pour former le longeron 6.

Selon l'invention, une jonction entre le pied avant 4 et le longeron 6, représentée sur les figures 1 et 2, est disposée transversalement à l'axe du longeron 6. Elle est ainsi inclinée par rapport à la direction longitudinale du véhicule, qui est aussi la direction d'extension du longeron 6.

La jonction entre le pied avant 4 et le longeron 6 est notamment selon la direction verticale, perpendiculaire à la direction d'extension du longeron 6.

La jonction entre le pied avant 4 et le longeron 6 est en particulier entre la première demi-coque 12 du pied avant 4 et la première demi-coque 26 du longeron 6, et entre la deuxième demi-coque 13 du pied avant 4 et la deuxième demi-coque 28 du longeron 6. Les âmes 14 et 30 sont, en effet, en contact sur une partie de leur extrémité, ainsi qu'au moins une portion des ailes 16 et 32, 16 et 33, et des bords 18 et 34, 18 et 35. Les âmes 20 et 36 sont également en contact sur une partie de leur extrémité, ainsi qu'au moins une portion des ailes 22 et 38, 22 et 39, et des bords 24 et 40, 24 et 41.

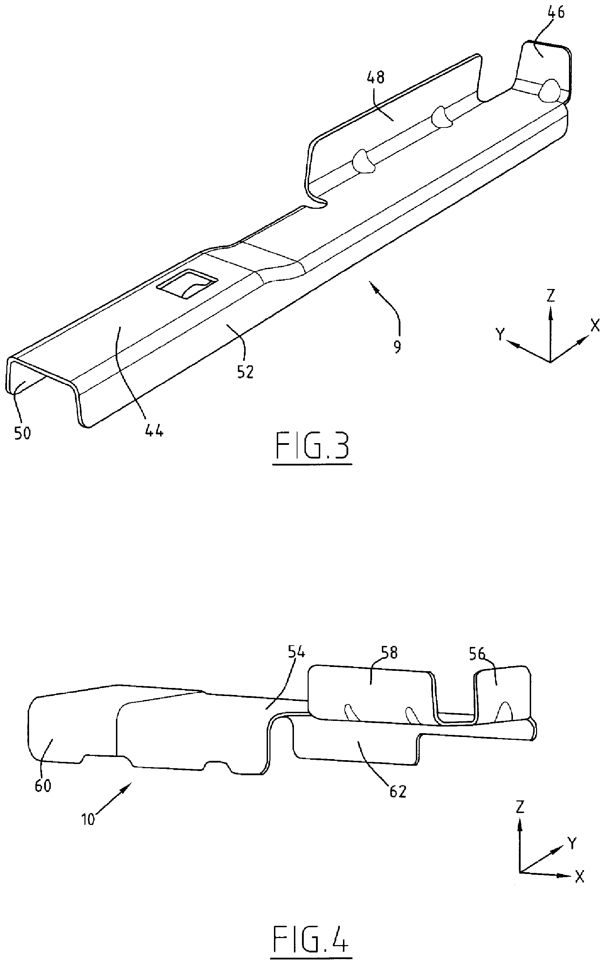

Sur la figure 3, le premier élément 9 de liaison a une forme allongée selon la direction longitudinale, direction d'extension du longeron 6. Il comporte une âme sensiblement plane 44 et des pattes de fixation 46, 48, 50, 52, s'étendant à partir des bords de l'âme 44 et repliées dans des sens opposés. Le premier élément 9 possède sur une partie de sa longueur une section transversale en « U » ouverte vers le bas.

Le premier élément 9 est réalisé d'une seule pièce, par exemple par découpe et déformation d'un flanc de tôle.

Sur la figure 4, le deuxième élément 10 de liaison a également une forme allongée selon la direction longitudinale, direction d'extension du longeron 6. Il comporte une âme sensiblement plane 54 et des pattes de fixation 56, 58, 60, 62, s'étendant à partir des bords de l'âme 54 et repliées dans des sens opposés. Le deuxième élément 10 possède sur une partie de sa longueur une section transversale en « U » ouverte vers le bas.

Le deuxième élément 10 est réalisé d'une seule pièce, par exemple par découpe et déformation d'un flanc de tôle.

Le renfort 8 est fixé au pied avant 4 et au longeron 6 selon une direction sensiblement longitudinale et chevauche la jonction entre le pied avant 4 et le longeron 6.

Le premier élément 9 de liaison est en particulier fixé à la première demi-coque 12 du pied avant 4 et à la première demi-coque 26 du longeron 6, par l'intermédiaire de moyens de fixation non représentés, tels que des rivets. Le premier élément 9 chevauche ainsi la jonction entre la première demi-coque 12 du pied avant 4 et la première demi-coque 26 du longeron 6.

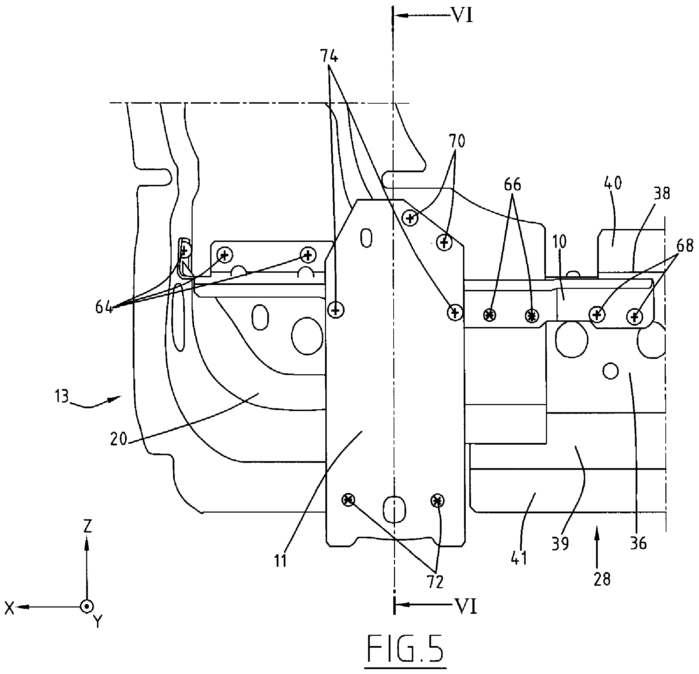

Sur la figure 5, le deuxième élément 10 de liaison est fixé à la deuxième demi-coque 13 du pied avant 4 par l'intermédiaire de moyens de fixation 64, 66, tels que des rivets, et à la deuxième demi-coque 28 du longeron 6, par l'intermédiaire de moyens de fixation 68, tels que des rivets. Le deuxième élément 10 chevauche ainsi, de par les moyens de fixation 66 et 68, la jonction entre la deuxième demi-coque 13 du pied avant 4 et la deuxième demi-coque 28 du longeron 6.

Le renfort 8 est fixé de telle sorte qu'il est à l'écart des ailes inférieures 33, 39 du longeron 6. Il est notamment au plus près des ailes supérieures 32, 38 du longeron 6.

Le premier élément 9 est en particulier fixé à l'écart de l'aile inférieure 33 de la première demi-coque 26 du longeron 6 et au plus près de l'aile supérieure 32 de la première demi-coque 26. Le deuxième élément 10 de liaison est fixé à l'écart de l'aile inférieure 39 de la deuxième demi-coque 28 du longeron 6 et au plus près de l'aile supérieure 38 de la deuxième demi-coque 28.

L'appui de cric 11 se trouve à proximité de la jonction entre le pied avant 4 et le longeron 6, et sur la figure 5, est fixé à la deuxième demi-coque 13 du pied avant 4, par l'intermédiaire des moyens de fixation 70, 72.

L'appui de cric 11 est également fixé au deuxième élément 10, par l'intermédiaire de moyens de fixation 74, tels que des rivets.

Selon le mode de réalisation ici décrit, l'appui de cric 11 n'a pas de liaison avec le premier élément de liaison 9 comme le montre la figure 6.

Les pattes de fixation 46, 48, 50, 56, 58 et 60 sont en contact avec des surfaces du pied avant 4, pour permettre la fixation du renfort 8 sur le pied avant 4.

Les pattes de fixation 50 et 60 sont en contact avec une surface des âmes 30 et 36 du longeron 6, afin de permettre la fixation du renfort 8 sur le longeron 6.

Les pattes de fixation 46, 48 et 50 du premier élément 9 sont en particulier en contact avec des surfaces de la première demi-coque 12 du pied avant 4, pour permettre la fixation du premier élément 9 sur la première demi-coque 12.

La patte de fixation 50 du premier élément 9 est également en contact avec une surface de l'âme 30 de la première demi-coque 26 du longeron 6, afin de permettre la fixation du premier élément 9 sur la première demi-coque 26.

Les pattes de fixation 56, 58 et 60 du deuxième élément 10 sont en particulier en contact avec des surfaces de la deuxième demi-coque 13 du pied avant 4, pour permettre la fixation du deuxième élément 10 sur la deuxième demi-coque 13, à l'aide des moyens 64, 66.

La patte de fixation 60 du deuxième élément 10 est également en contact avec une surface de l'âme 36 de la deuxième demi-coque 28 du longeron 6, afin de permettre la fixation du deuxième élément 10 sur la deuxième demi-coque 28, à l'aide des moyens 68.

La patte de fixation 62 est en contact avec une surface de l'appui de cric 11, pour permettre la fixation du deuxième élément 10 sur l'appui de cric 11, à l'aide des moyens 74.

Sur la figure 6, le premier élément 9 et le deuxième élément 10 ont une section en U et leurs pattes de fixation 50 et 60 sont en contact avec le pied avant 4, tandis que la patte de fixation 62 du deuxième élément 10 est en contact avec l'appui de cric 11, comme précisé ci-dessus.

La première demi-coque 12 du pied avant 4, l'aile supérieure 32 du longeron 6 et le premier élément 9 se chevauchent sur 3 épaisseurs dans une zone au droit en haut de la jonction entre le pied avant 4 et le longeron 6, la première demi-coque 12 et le premier élément 9 étant soudés l'un à l'autre.

La première demi-coque 12 du pied avant 4 et l'aile inférieure 33 du longeron 6 se chevauchent sur 2 épaisseurs dans une zone au droit en bas de la jonction entre le pied avant 4 et le longeron 6.

Sur la vue en coupe longitudinale de la figure 7, la patte 56 du deuxième élément 10 est en contact avec l'aile 22 de la deuxième demi-coque 13 du pied avant 4, comme précisé ci-dessus. En outre, la deuxième demi-coque 13 du pied avant 4, l'aile supérieure 38 du longeron 6 et le deuxième élément 10 se chevauchent et sont reliés entre eux dans une zone 76 au droit en haut de la jonction entre le pied avant 4 et le longeron 6.

La deuxième demi-coque 13 du pied avant 4 et l'aile inférieure 39 du longeron 6 se chevauchent également dans une zone 78 au droit en bas de la jonction entre le pied avant 4 et le longeron 6.

Ainsi, la jonction entre le pied avant 4 et le longeron 6 étant inclinée par rapport à la direction longitudinale, la translation longitudinale d'avant en arrière du pied avant 4 par rapport au longeron 6 est plus difficile et des efforts longitudinaux sont mieux transmis du pied avant 4 au longeron 6.

La transmission des efforts est optimale quand la jonction entre le pied avant 4 et le longeron 6 est sensiblement selon la direction verticale.

L'ajout du renfort de liaison 8 participe également à l'amélioration de la transmission des efforts longitudinaux d'avant en arrière lors d'un choc frontal.

En effet, les pattes 46 et 56 sont directement en contact avec une partie du pied avant 4, située du côté du passage de roue avant 7 et recevant une part importante des efforts longitudinaux lors d'un choc frontal, si bien qu'elles transmettent ensuite les efforts aux âmes 44 et 54 des éléments 9 et 10.

Les pattes 48, 50, 58 et 60 également en contact avec le pied avant 4 transmettent une autre part des efforts aux âmes 44 et 54 des éléments 9 et 10.

Les efforts décrits ci-dessus sont ensuite transmis au longeron 6, par l'intermédiaire du chevauchement entre le pied avant 4, le premier élément 9 et le longeron 6, ainsi que par la liaison de la patte 50 du premier élément 9 et du longeron 6.

Les efforts décrits ci-dessus sont également transmis au longeron 6, par l'intermédiaire du chevauchement entre le pied avant 4, le deuxième élément 10 et le longeron 6 dans la zone 76, ainsi que par la liaison de la patte 60 du deuxième élément 10 et du longeron 6.

Le chevauchement entre le pied avant 4 et le longeron 6 dans la zone 78 permet de transmettre une autre partie des efforts longitudinaux.

Le renfort 8 a également pour fonction de rigidifier la zone de jonction entre le pied avant et le longeron.

La rotation du pied avant 4 autour des axes Y ou Z lors d'un choc frontal est enfin mieux maîtrisée, grâce à l'écart entre le premier élément 9 et l'aile inférieure 33 du longeron 6 ainsi qu'entre le deuxième élément 10 et l'aile inférieure 39 du longeron 6 pour la rotation autour de l'axe Y, et grâce à la section en U sur au moins une partie des éléments 9, 10 pour la rotation autour de l'axe Z.

Selon d'autres modes de réalisation, le renfort de liaison 8 consiste en le premier élément 9 de liaison.

Selon d'autres modes de réalisation, le renfort de liaison 8 consiste en le deuxième élément 10 de liaison.

Selon d'autres modes de réalisation, un autre ou plusieurs autres renfort(s) de liaison 8 peu(ven)t être fixé(s) au pied avant 4 et au longeron 6 selon la direction longitudinale.

De même, les liaisons entre les différents éléments décrits ci-dessus, notamment, entre le longeron 6, le pied avant 4 et les premier et deuxième éléments de liaison 9 et 10 ne représentent qu'un mode de réalisation particulier qui peut être aménagé selon le procédé d'assemblage choisi.

## Revendications

1. Structure de véhicule automobile comprenant :
- un pied avant (4),
- un longeron (6), fixé au pied avant (4) suivant une jonction,
- un renfort de liaison (8), fixé au pied avant (4) et au longeron (6), est allongé selon la direction d'extension du longeron (6), et comporte au moins une âme (44, 54) s'étendant sensiblement selon un plan perpendiculaire à l'axe vertical du véhicule,
**caractérisée en ce que** la jonction entre le pied avant (4) et le longeron (6) est perpendiculaire à la direction d'extension du longeron (6) et s'étend transversalement par rapport à la direction d'extension du longeron (6).

2. Structure de véhicule selon la revendication 1, **caractérisée en ce que** le pied avant (4) comporte une première demi-coque (12) et une deuxième demi-coque (13) délimitant entre elles une structure en caisson allongée de section transversale fermée, et **en ce que** le longeron (6) comporte une première demi-coque (26) et une deuxième demi-coque (28) délimitant entre elles une structure en caisson allongée de section transversale fermée.

3. Structure de véhicule selon l'une des revendications 1 et 2, **caractérisée en ce que** le renfort de liaison (8) comprend un premier élément (9) de liaison et un deuxième élément (10) de liaison, qui ne sont pas fixés l'un à l'autre.

4. Structure de véhicule selon l'une quelconque des revendications précédentes, **caractérisée en ce qu'**elle comporte également un appui de cric avant (11), fixé au renfort de liaison (8) et au pied avant (4).

5. Structure de véhicule selon l'une quelconque des revendications précédentes prise avec la revendication 2, **caractérisée en ce que** les premières demi-coques (12, 26) et le premier élément de liaison (9) se chevauchent dans une première zone au droit de la jonction entre le pied avant (4) et le longeron (6), et/ou que les deuxièmes demi-coques (13, 28) et le deuxième élément de liaison (10) se chevauchent dans une deuxième zone (76) au droit de la jonction entre le pied avant (4) et le longeron (6).

6. Structure de véhicule selon l'une quelconque des revendications précédentes prise avec la revendication 2, **caractérisée en ce que** chaque demi-coque (26, 28) du longeron (6) comporte une âme (30, 36), une aile supérieure (32, 38) et une aile inférieure (33, 39) et **en ce que** le renfort de liaison (8) est à l'écart de l'aile inférieure (33, 39) correspondante.

7. Structure de véhicule selon l'une des revendications précédentes, **caractérisée en ce que** le renfort de liaison (8) a une forme allongée et possède des pattes de fixation (46, 48, 50, 52, 56, 58, 60, 62) s'étendant à partir des bords de l'âme (44, 54) et repliées dans des sens opposés.

8. Structure de véhicule selon l'une des revendications précédentes, **caractérisée en ce que** le renfort de liaison (8) est réalisé par découpe et déformation d'un flanc de tôle.

9. Véhicule d'automobile comprenant une structure, selon l'une quelconque des revendications précédentes.

## Patentansprüche

1. Kraftfahrzeugaufbau, umfassend:
- einen vorderen Fuß (4),
- einen Längsträger (6), der an dem vorderen Fuß (4) entlang einer Fuge befestigt ist,
- eine Verstärkungsverbindung (8), die an dem vorderen Fuß (4) und an dem Längsträger (6) befestigt ist, die entlang der Ausdehnungsrichtung des Längsträgers (6) gestreckt ist und mindestens eine Seele (44, 54) umfasst, die sich im Wesentlichen entlang einer Ebene senkrecht zu der vertikalen Achse des Fahrzeugs erstreckt,
**dadurch gekennzeichnet, dass** die Fuge zwischen dem vorderen Fuß (4) und dem Längsträger (6) zu der Ausdehnungsrichtung des Längsträgers (6) senkrecht ist und sich im Wesentlichen in Bezug zu der Ausdehnungsrichtung des Längsträgers (6) erstreckt.

2. Kraftfahrzeugaufbau nach Anspruch 1, **dadurch gekennzeichnet, dass** der vordere Fuß (4) eine erste Halbschale (12) und eine zweite Halbschale (13) umfasst, die zwischen einander eine längliche Kastenstruktur mit geschlossenem Querschnitt abgrenzen, und dass der Längsträger (6) eine erste Halbschale (26) und eine zweite Halbschale (28) umfasst, die zwischen einander eine längliche Kastenstruktur mit geschlossenem Querschnitt abgrenzen.

3. Kraftfahrzeugaufbau nach einem der Ansprüche 1 und 2, **dadurch gekennzeichnet, dass** die Verbindungsverstärkung (8) ein erstes Verbindungselement (9) und ein zweites Verbindungselement (10), die aneinander befestigt sind, umfasst.

4. Kraftfahrzeugaufbau nach einem der vorhergehenden Ansprüche, **dadurch gekennzeichnet, dass** er auch eine vordere Wagenheberauflage (11) umfasst, die an der Verbindungsverstärkung (8) und an dem vorderen Fuß (4) befestigt ist.

5. Kraftfahrzeugaufbau nach einem der vorhergehenden Ansprüche mit Anspruch 2 genommen, **dadurch gekennzeichnet, dass** die ersten Halbschalen (12, 26) und das erste Verbindungselement (9) einander in einer ersten Zone im rechten Winkel zu der Fuge zwischen dem vorderen Fuß (4) und dem Längsträger (6) überlagern, und/oder dass die zweiten Halbschalen (13, 28) und das zweite Verbindungselement (10) einander in einer zweiten Zone (76) im rechten Winkel zu der Fuge zwischen dem vorderen Fuß (4) und dem Längsträger (6) überlagern.

6. Kraftfahrzeugaufbau nach einem der vorhergehenden Ansprüche, mit Anspruch 2 genommen, **dadurch gekennzeichnet, dass** jede Halbschale (26, 28) des Längsträgers (6) eine Seele (30, 36) und eine obere Rippe (32, 38) und eine untere Rippe (33, 39) umfasst, und dass die Verbindungsverstärkung (8) abseits der entsprechenden unteren Rippe (33, 39) ist.

7. Kraftfahrzeugaufbau nach einem der vorhergehenden Ansprüche, **dadurch gekennzeichnet, dass** die Verbindungsverstärkung (8) eine gestreckte Form hat und Befestigungspratzen (46, 48, 50, 52, 56, 58, 60, 62) besitzt, die sich ausgehend von Rändern der Seele (44, 54) erstrecken und in entgegengesetzte Richtungen umgefaltet sind.

8. Kraftfahrzeugaufbau nach einem der vorhergehenden Ansprüche, **dadurch gekennzeichnet, dass** die Verbindungsverstärkung (8) durch Ausschneiden und Verformen eines Blechteils hergestellt wird.

9. Kraftfahrzeug, das einen Aufbau nach einem der vorhergehenden Ansprüche umfasst.

## Claims

1. An automobile structure including:
- a front pillar (4),
- a side member (6), fixed to the front pillar (4) following a junction,
- a connecting reinforcement (8), fixed to the front pillar (4) and to the side member (6), is extended along the extension direction of the side member (6), and comprises at least one core (44, 54) extending substantially along a plane perpendicular to the vertical axis of the vehicle,
**characterized in that** the junction between the front pillar (4) and the side member (6) is perpendicular to the extension direction of the side member (6) and extends transversely with respect to the extension direction of the side member (6).

2. The vehicle structure according to Claim 1, **characterized in that** the front pillar (4) comprises a first half-shell (12) and a second half-shell (13) delimiting between them an elongated body structure of closed cross-section, and **in that** the side member (6) comprises a first half-shell (26) and a second half-shell (28) delimiting between them an elongated body structure of closed cross-section.

3. The vehicle structure according to one of Claims 1 and 2, **characterized in that** the connecting reinforcement (8) includes a first connecting element (9) and a second connecting element (10), which are not fixed to one another.

4. The vehicle structure according to any one of the preceding claims, **characterized in that** it also comprises a front jack support (11), fixed to the connecting reinforcement (8) and to the front pillar (4).

5. The vehicle structure according to any one of the preceding claims, taken with Claim 2, **characterized in that** the first half-shells (12, 26) and the first connecting element (9) overlap each other in a first zone at right angles to the junction between the front pillar (4) and the side member (6), and/or that the second half-shells (13, 28) and the second connecting element (10) overlap each other in a second zone (76) at right angles to the junction between the front pillar (4) and the side member (6).

6. The vehicle structure according to any one of the preceding claims, taken with Claim 2, **characterized in that** each half-shell (26, 28) of the side member (6) comprises a core (30, 36), an upper wing (32, 38) and a lower wing (33, 39) and **in that** the connecting reinforcement (8) is at a distance from the corresponding lower wing (33, 39).

7. The vehicle structure according to one of the preceding claims, **characterized in that** the connecting reinforcement (8) has an elongated shape and has fixing lugs (46, 48, 50, 52, 56, 58, 60, 62) extending from the edges of the core (44, 54) and folded over in opposite directions.

8. The vehicle structure according to one of the preceding claims, **characterized in that** the connecting reinforcement (8) is realized by cutting and deformation of a metal sheet blank.

9. A motor vehicle including a structure according to any one of the preceding claims.
